(19) Europäisches Patentamt / European Patent Office / Office européen des brevets

(11) **EP 3 351 050 B1**

(12) **EUROPÄISCHE PATENTSCHRIFT**

(45) Veröffentlichungstag und Bekanntmachung des Hinweises auf die Patenterteilung:
**14.08.2019   Patentblatt 2019/33**

(21) Anmeldenummer: **16760412.3**

(22) Anmeldetag: **23.08.2016**

(51) Int Cl.:
*H04W 76/14* (2018.01)      *H04W 72/08* (2009.01)

(86) Internationale Anmeldenummer:
**PCT/EP2016/069852**

(87) Internationale Veröffentlichungsnummer:
**WO 2017/045870 (23.03.2017 Gazette 2017/12)**

(54) **VERFAHREN ZUR ENDGERÄTE-ZU-ENDGERÄTE KOMMUNIKATION IN EINEM ZELLULAREN MOBILFUNKNETZ UND EIN DIESBEZÜGLICHES SYSTEM**

METHOD FOR TERMINAL-TO-TERMINAL COMMUNICATION IN A CELLULAR MOBILE RADIO NETWORK, AND A SYSTEM THEREFOR

PROCÉDÉ DE COMMUNICATION TERMINAL-À-TERMINAL DANS UN RÉSEAU RADIOÉLECTRIQUE MOBILE CELLULAIRE ET SYSTÈME ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2015   DE 102015217568**

(43) Veröffentlichungstag der Anmeldung:
**25.07.2018   Patentblatt 2018/30**

(73) Patentinhaber: **Bayerische Motoren Werke Aktiengesellschaft**
**80809 München (DE)**

(72) Erfinder:
• **BOTSOV, Mladen**
**80939 München (DE)**
• **GOZALVEZ SERRANO, David**
**80636 München (DE)**
• **FERTL, Peter**
**80799 München (DE)**
• **KASPARICK, Martin**
**12435 Berlin (DE)**
• **STANCZAK, Slawomir**
**10551 Berlin (DE)**
• **GARRIDO CAVALCANTE, Renato Luis**
**10585 Berlin (DE)**

(56) Entgegenhaltungen:
**WO-A1-2012/019349      WO-A1-2015/076867**
**US-A1- 2014 141 789**

**Beschreibung**

Die vorliegende Erfindung betrifft ein Verfahren zur Endgeräte-zu-Endgeräte Kommunikation in einem zellularen Mobilfunknetz und ein diesbezügliches System.

Kooperative Intelligente Transportsysteme (C-ITS) basieren auf dem Austausch von Nachrichten zwischen Fahrzeugen, sogenannter Vehicle-to-Vehicle Kommunikation (V2V), und/oder auf dem Austausch von Nachrichten zwischen Fahrzeugen und Infrastruktureinheiten, sogenannter Vehicle-to-Infrastructure Kommunikation (V2I). Ihr Ziel ist es die Verkehrssicherheit und Verkehrseffizienz zu erhöhen. Dieser Nachrichtenaustausch beziehungsweise diese Kommunikation wird im Allgemeinen mittels drahtloser Kommunikation bewerkstelligt, beispielsweise mittels einer Kommunikation auf Basis eines Wireless Local Area Network (WLAN) Kommunikationsstandards, wie zum Beispiel auf Basis des vom Institute of Electrical and Electronics Engineers (IEEE) herausgegebenen Standards IEEE 802.11p.

Die meisten theoretischen Überlegungen die Kommunikation mittels zellularer Netzwerke diesbezüglich betreffend, fokussieren sich auf zellulare Netzwerke für eine Endgeräte-zu-Endgeräte Kommunikation, sogenannte "D2D-enabled cellular networks", und beschäftigen sich hauptsächlich mit der Errichtung von effizienten Protokollen für die direkte Kommunikation. In diesem Kontext müssen Basisstationen eine Vielzahl an Kontrolldaten mit den D2D-Peers austauschen. Dabei wird stets angenommen, dass eine Verbindung zwischen einer Basisstation und einem Mobilfunkkommunikationsendgerät aufrecht erhalten wird, um diese Kontrolldaten auszutauschen. Dies kann als netzwerkunterstützte Endgeräte-zu-Endgeräte Kommunikation aufgefasst werden, somit als "network-assisted device-to-device communication" (aD2D). Dieser Ansatz verspricht eine höhere Performance und Zuverlässigkeit als die herkömmliche ad-hoc Kommunikation, wie beispielsweise mittels IEEE 802.11p.

Bislang ist jedoch noch kein vollständiger Standard für aD2D-Kommunikation veröffentlicht beziehungsweise eingerichtet worden. Beispielsweise besteht bislang auf der konzeptionellen Ebene die Ressourcen-Allokation als eines der größten ungelösten Probleme. Die meisten Ideen zur Lösungsfindung basieren dabei auf der Idee der "accumulating channel state Information" für alle Verbindungen in dem System, bei der Basisstation. Um dabei eine effiziente Nutzung der Funkressourcen zu gewährleisten, bedürfen die Basisstationen präziser Informationen über den Status des entsprechenden Übertragungskanals in dem Netzwerk. Um darüber hinaus eine ausreichende Zuverlässigkeit in kritischen Applikationsfällen zu garantieren, benötigen D2D-Transmitter ebenfalls ein bestimmtes Wissen bezüglich des Übertragungskanals. In diesem Kontext stehen sich die Anforderungen an C-ITS Anwendungen mittels aD2D Kommunikation in mobilen Kommunikationssystemen und die Ermittlung von präzisen Kenntnissen bezüglich des Übertragungskanales an den Basisstationen konkurrierend gegenüber.

Direkte Messungen des Kanals können sich dabei als schwierig herausstellen, aufgrund der dann großen Anzahl an Signalinformationen (wie beispielsweise der Übertragung von Referenzsignalen für die Kanalmessung und Messprotokollen) die zwischen den Basisstationen und den Mobilfunkkommunikationsendgeräten ausgetauscht werden müssen. Ferner ist ein geeignetes Design gefordert, um Frequenzkollisionen zwischen D2D und zellularen Referenzsignalen aus Nachbarzellen zu vermeiden.

Generell kann es äußerst schwierig werden, Kanalmessungen und entsprechende Messprotokolle für alle D2D-Paare und zellulare Mobilfunkkommunikationsendgeräte in der Zelle ausreichend gut durchzuführen, wenn in Zukunft die Anzahl an Mobilfunkkommunikationsendgeräten in einer weiter Zelle zunimmt. Im Falle der Mobilfunkkommunikationsendgeräte kann die Beschaffung zuverlässiger Kanalschätzungen an der Basisstation für die D2D-Kommunikationspaare noch herausfordernder sein, als ein Resultat eines hochdynamisch zu propagierenden Kanales. Daraus kann geschlossen werden, dass eine Regelung für C-ITS Anwendungen mittels netzwerkkontrollierter D2D Kommunikation, von der technischen Seite her, noch nicht ausreichend geklärt ist.

Daher wäre es wünschenswert eine Möglichkeit bereitzustellen, welche eine zuverlässige D2D Kommunikation, basierend auf zellularen Mobilfunknetzwerken, zuverlässig ermöglicht.

WO 2015/076867 A1 offenbart ein Verfahren zur Endgeräte-zu-Endgeräte Kommunikation in einem zellularen Mobilfunknetz, wobei eine Konfigurationsinformation bezüglich einer Konfigurationseinstellung einer Funkübertragung für eine Endgeräte-zu-Endgeräte bereitgestellt wird, wobei die Konfigurationseinstellung eine Aussage bezüglich einer vorzunehmenden Konfiguration der Funkübertragung ermöglicht.

US 2014/0141789 A1 offenbart auch ein Verfahren zur Endgeräte-zu-Endgeräte Kommunikation in einem zellularen Mobilfunknetz, dass das Bereitstellen einer Karte vorschlägt, die die ortsabhängige Ressourcenzuweisung innerhalb eines Abdeckungsgebietes einer Basisstation beinhaltet, wobei das Bereitstellen der Ressourcen die für die Endgeräte-zu-Endgeräte Kommunikation benutzt werden basierend auf der Karte erfolgt.

Es ist eine Aufgabe der Erfindung, eine Möglichkeit vorzuschlagen, welche zumindest einen Teil der im Stand der Technik bekannten Nachteile vermeidet oder zumindest vermindert.

Die Aufgabe wird erfindungsgemäß gelöst mittels eines Verfahrens gemäß dem Hauptanspruch, sowie mittels eines Systems, eines Computerprogrammprodukts und eines Datenträgers gemäß den nebengeordneten Ansprüchen 9-11.

Der Gegenstand des Hauptanspruches betrifft ein Verfahren zur Endgeräte-zu-Endgeräte Kommunikation in einem zellularen Mobilfunknetz, insbesondere für eine Kooperative Intelligente Transportsysteme Kommunikation, wobei das Verfahren folgende Schritte aufweist:

- Bereitstellen einer Funksignalinterferenzkarte, wobei die Funksignalinterferenzkarte indikativ ist für eine ortsabhängige Funksignalinterferenzstörung innerhalb eines Abdeckungsgebietes einer Basisstation, wobei die ortsabhängige Funksignalinterferenzstörung indikativ ist, für eine Funksignalinterferenzstörung einer Endgeräte-zu-Endgeräte Kommunikation, und wobei das Bereitstellen der Funksignalinterferenzkarte basierend auf einem Lernalgorithmus für eine geographische Funksignalinterferenzkarte erfolgt,
- Bereitstellen einer Konfigurationsinformation bezüglich einer Konfigurationseinstellung einer Funkübertragung für eine Endgeräte-zu-Endgeräte Kommunikation zwischen einem ersten Mobilfunkkommunikationsendgerät und einem zweiten Mobilfunkkommunikationsendgerät, wobei das Bereitstellen der Konfigurationsinformation basierend auf der ortsabhängigen Funksignalinterferenzstörung der Funksignalinterferenzkarte erfolgt und wobei die Konfigurationseinstellung eine Aussage bezüglich einer vorzunehmenden Konfiguration der Funkübertragung ermöglicht, und
- Aufbauen einer Endgeräte-zu-Endgeräte Kommunikation zwischen dem ersten Mobilfunkkommunikationsendgerät und dem zweiten Mobilfunkkommunikationsendgerät, unter Berücksichtigung der bereitgestellten Konfigurationsinformation bezüglich der Konfigurationseinstellung.

Die Verfahrensschritte können dabei automatisiert ausgeführt werden.

Eine ortsabhängige Funksignalinterferenzstörung im Sinne der Erfindung kann dabei eine Interferenzstörung einer elektromagnetischen Funkwelle sein, wobei die Interferenzstörung ortsabhängig und somit im Abdeckungsbereich einer Basisstation in der Regel nicht konstant ist.

Eine Funksignalinterferenzstörung einer Endgeräte-zu-Endgeräte Kommunikation im Sinne der Erfindung meint dabei, dass die Interferenzstörung des Funksignales insbesondere eine Endgeräte-zu-Endgeräte Kommunikation betreffen kann.

Ein Lernalgorithmus für eine geographische Funksignalinterferenzkarte im Sinne der Erfindung kann dabei einen Algorithmus meinen, bei dem stets zunächst die Interferenz gelernt beziehungsweise bestimmt wird, beispielsweise als Schätzwert. Danach wird erst, basierend auf diesen Informationen, eine Kanalbedingung, wie beispielsweise eine Kanalqualität des für die Endgeräte-zu-Endgeräte Kommunikation, also die D2D Kommunikation, genutzten Kommunikationskanales, geschätzt.

Dieser Lernansatz kann in zwei Komponenten aufgeteilt werden, dem Lernen der ortsabhängigen Interferenzstörung und darauf basierend die Kanalschätzung für die D2D Kommunikation. Dabei erfolgt das Lernen der Interferenzstörung an der Basisstation, wohingegen die Messungen für die Ermittlung der Interferenzstörungen von den D2D Teilnehmern vorgenommen und an die Basisstation übermittelt werden.

Der Lernansatz kann auf konzeptioneller Ebene wie nachfolgend zusammengefasst werden:
Anstatt die Interferenzen und damit Interferenzstörungen zu berücksichtigen, die ein Kommunikationsteilnehmerpaar erfährt, wird eine geographische Interferenzkarte erstellt. Dabei wird jeder Koordinate in der Karte ein Interferenzwert beziehungsweise Interferenzstörungswert zugeordnet. Dieser Wert kann dabei interpretiert werden, als die Interferenz beziehungsweise Interferenzstörung, die ein D2D Kommunikationsteilnehmer typischerweise, also im Mittel, erfährt, wenn er sich entlang der geographischen Orte auf der Karte bewegt.

Einen zweiten Schritt stellt die Nutzung der Interferenzkarte dar, welche durch die Basisstation gelernt wurde. Dieser Schritt umfasst die Ermittlung der Schätzung der Kanalbedingung des von den D2D Kommunikationsteilnehmern genutzten Kanales. Für diese Schätzung kann angenommen werden, dass dazu auf die Messwerte der D2D Kommunikationsteilnehmer in dem Systems zurückgegriffen werden kann.

Eine Konfigurationsinformation bezüglich einer Konfigurationseinstellung einer Funkübertragung im Sinne der Erfindung, kann dabei eine Information meinen, welche dazu geeignet ist, ein Kommunikationsendgerät darüber zu informieren, wie eine gewünschte Funkübertragung für eine Endgeräte-zu-Endgeräte Kommunikation einzustellen ist. Dies kann beispielsweise mittels einer Prädiktion erfolgen, welche wahrscheinlichkeitsbehaftet ist und eine Aussage über die Qualität des zu nutzenden Funkkanales für die Funkübertragung ermöglicht. Somit kann die Konfigurationsinformation eine Vorhersageinformation sein, und die Konfigurationseinstellung für die Funkübertragung kann entsprechend eine Kanalqualitätsbedingung für den für die Funkübertragung zu nutzenden Funkkanal sein. Die Kanalqualitätsbedingung kann dann eine Aussage über eine Kanaldämpfung bezüglich des Funkkanales sein.

Im Fall von netzwerkunterstützter Endgeräte-zu-Endgeräte Kommunikation kann die Basisstation auch Informationen übermitteln, wie die direkte Übertragung inklusive Senderleistung und/oder Modulation zu konfigurieren ist. So, dass die Basisstation diese Konfiguration anstatt der Prädiktion der Kanalqualität oder auch zusätzlich zu der Prädiktion der Kanalqualität den betreffenden Kommunikationsendgeräten übermitteln kann.

Eine Endgeräte-zu-Endgeräte Kommunikation im Sinne der Erfindung, kann dabei eine Kommunikation in einem zellularen Mobilfunktelekommunikationsnetz meinen, bei der mindestens zwei Mobilfunkkommunikationsvorrichtungen unmittelbar miteinander kommunizieren. Dabei ist die Kommunikation jedoch nicht ausschließlich auf zwei Teilnehmer begrenzt, sondern kann auch einen Dritten oder auch weitere Teilnehmer aufweisen. Beispielsweise kann eine Endgeräte-zu-Endgeräte Kommunikation auch eine Broadcast-Kommunikation aufweisen, bei der ein Endgerät zu weiteren Endgeräten Broadcasting-Informationen direkt übermittelt.

Eine Endgeräte-zu-Endgeräte Kommunikation kann bedeuten, dass prinzipiell die Möglichkeit bestehen kann, Broadcast Übertragungen durchzuführen, indem die Übertragung entsprechend dem Gerät mit den schlechtesten Qualitätsbedingungen konfiguriert wird.

Ein Mobilfunkkommunikationsendgerät im Sinne der Erfindung, kann dabei eine Mobilfunkkommunikationsvorrichtung sein, welche jedoch anders, als eine beliebige mit einer Basisstation verbundene Mobilfunkkommunikationsvorrichtung, zur Endgeräte-zu-Endgeräte Kommunikation eingerichtet ist.

Durch die erfindungsgemäße Lehre wird der Vorteil erreicht, dass eine Endgeräte-zu-Endgeräte Kommunikation in einem zellularen Mobilfunkkommunikationsnetz für mindestens zwei Mobilfunkkommunikationsendgeräte bereitgestellt werden kann, wie sie für eine D2D basierte Kommunikation für C-ITS Anwendungen benötigt wird.

Ein weiterer Vorteil ist, dass dadurch keine Kanalmessungen und entsprechende Messprotokolle für alle D2D-Paare und zellulare Mobilfunkkommunikationsendgeräte in der Zelle mehr benötigt werden.

Bei einer Kooperativen Intelligenten Transportsysteme Kommunikation kann die Endgeräte-zu-Endgeräte Kommunikation dazu eingerichtet sein, eine unmittelbare Vehicle-to-Vehicle Kommunikation und/oder eine unmittelbare Vehicle-to-Infrastructure Kommunikation zu ermöglichen. Unmittelbar meint dabei, dass in dem zellularen Mobilfunkkommunikationsnetzwerk der Basisstation lediglich die Bedeutung zukommt, Aussagen über einen Kommunikationskanal und/oder die Kommunikationsteilnehmer zu machen, um die Endgeräte-zu-Endgeräte Kommunikation zu ermöglichen. Solche Aussagen können dabei eine Kanalqualitätsinformation sein, ein Hinweis wie ein Senden, Empfangen und/oder eine Kanalwahl vorzunehmen sind, oder auch eine Teilnehmerinformation, also beispielsweise bei einem Broadcasting, welche Teilnehmer an dem entsprechenden Broadcasting teilnehmen möchten. Die Basisstation ist jedoch nicht mehr dazu notwendig, um die eigentliche Kommunikation zwischen den Teilnehmern durchzuführen, sie führt somit kein Routing der Kommunikationsdaten mehr durch.

Der Gegenstand eines nebengeordneten Anspruches betrifft ein System zur Endgeräte-zu-Endgeräte Kommunikation in einem zellularen Mobilfunknetz, das System aufweisend eine Basisstation eines Mobilfunksystems, ein erstes Mobilfunkkommunikationsendgerät und ein zweites Mobilfunkkommunikationsendgerät. Dabei ist die Basisstation dazu eingerichtet, mit der Basisstation verbundenen Endgeräte-zu-Endgeräte Mobilfunkkommunikationsvorrichtungen eine entsprechende Information, bezüglich einer Konfigurationsinformation, bezüglich einer Konfigurationseinstellung einer Funkübertragung für eine Endgeräte-zu-Endgeräte Kommunikation bereitzustellen. Weiterhin ist das System dazu eingerichtet, ein erfindungsgemäßes Verfahren auszuführen.

Dabei kann das Konfigurieren und/oder Aufbauen der D2D Kommunikationsverbindung von der Basisstation der Zelle vorgenommen werden, wohingegen die Kommunikationsdaten unmittelbar, also ohne Umweg über die Basisstation, von einem D2D Kommunikationsteilnehmer zu dem oder den anderen an der D2D Kommunikationsverbindung beteiligten weiteren Kommunikationsteilnehmer oder Kommunikationsteilnehmern übertragen werden kann.

Durch die erfindungsgemäße Lehre wird der Vorteil erreicht, dass eine Endgeräte-zu-Endgeräte Kommunikation in einem zellularen Mobilfunkkommunikationsnetz für mindestens zwei Mobilfunkkommunikationsendgeräte bereitgestellt werden kann, wie sie für eine D2D basierte Kommunikation für C-ITS Anwendungen benötigt wird.

Ein weiterer Vorteil ist, dass keine kostenintensive Aufrüstung oder Neuinstallation der, in einem existierenden zellularen Mobilfunkkommunikationsnetz benötigten und vorhandenen Basisstation nötig ist.

Ein noch weiterer Vorteil ist, dass eine bessere Performance erreicht werden kann, durch eine zentralisierte Koordination und Konfiguration von Übertragungen, da die zentrale Koordinations- und Konfigurationseinheit über mehr Informationen verfügt.

Der Gegenstand eines weiteren nebengeordneten Anspruches betrifft ein Computerprogrammprodukt für ein System, wobei das System nach einem erfindungsgemäßen Verfahren betreibbar ist.

Durch die erfindungsgemäße Lehre wird der Vorteil erreicht, dass das Verfahren besonders effizient automatisiert ausgeführt werden kann.

Der Gegenstand eines weiteren nebengeordneten Anspruches betrifft einen Datenträger aufweisend ein erfindungsgemäßes Computerprogrammprodukt.

Durch die erfindungsgemäße Lehre wird der Vorteil erreicht, dass das Verfahren besonders effizient auf die das Verfahren ausführenden Vorrichtungen und/oder Systeme verteilt beziehungsweise vorgehalten werden kann.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mit umfasst, soweit der Kontext dies nicht explizit ausschließt. Etwaige Verfahrensschritte können, soweit der Kontext dies nicht explizit ausschließt, automatisiert ausgeführt werden.

Nachfolgend werden weitere exemplarische Ausgestaltungen des erfindungsgemäßen Verfahrens erläutert.

Entsprechend einer ersten exemplarischen Ausgestaltung weist das Verfahren ferner auf, dass das Bereitstellen der Funksignalinterferenzkarte basierend auf einer Received Signal Strength Indication Information erfolgt.

Eine Received Signal Strength Indication Information im Sinne der Erfindung kann dabei eine Information meinen, welche einen Indikator für die Empfangsfeldstärke kabelloser Kommunikationsanwendungen darstellt und wird auch RSSI genannt. Da der RSSI keine festgelegte Einheit hat, muss der Wert abhängig von der jeweiligen Anwendung interpretiert werden. Auch innerhalb des "Institute of Electrical and Electronics Engineers", auch IEEE genannt, 802.11 Standards gibt es verschiedene Definitionen, wobei ein höherer Wert einem besseren Empfang entspricht. In Messempfängern kann der RSSI-Wert auch als eine analoge Spannung an einem eigenen Anschluss für die weitere Verarbeitung ausgegeben werden. Mit einem geräteabhängigen Skalierungsfaktor kann der RSSI-Wert als Leistungspegel in der dimensionslosen Einheit dBm ausgedrückt werden. Dieser Indikator wird von Mobilfunktelefonen, Hochfrequenzmodulen und anderen auf Funkkommunikation angewiesenen Systemen benötigt, um einen für die Kommunikation brauchbaren Kanal zu finden. Falls die Signalstärke, die für eine erfolgreiche Kommunikation benötigt wird, auf dem aktuell genutzten Kanal unterschritten wird, kann mit Hilfe des RSSI-Wertes gegebenenfalls auf einen besseren Kanal gewechselt werden.

Die RSSI-Information ist dabei für die Summation aller empfangenen Energieverteilungen, auch "received power contributions" genannt, wichtig und kann dabei als eine Schätzung der Gesamtinterferenz interpretiert werden. Interferenzschätzungen können dabei mittels eines verwendeten Lernalgorithmus generiert werden. Dies kann dadurch selbst für geographische Orte erfolgen, bei denen keine Messwerte verfügbar sind. Sofern um solch einen Ort herum ausreichend Interferenzmesswerte vorhanden sind und der Lernalgorithmus sozusagen gut genug trainiert ist, können diese Interferenzschätzwerte durchaus ebenfalls als zuverlässig angesehen werden.

Um dieses Lernen zu ermöglichen, also um aus den Interferenzmesswerten der D2D Kommunikationsteilnehmer eine geographische Interferenzkarte generieren zu können, können öffentlich bereits verfügbare Maschinen-Lernprogramme, auch "machine learning tools" genannt, genutzt werden. Zwei solche beispielhafte Verfahren sind Adaptive Projected Subgradient Method basierende Algorithmen, auch APSM-Algorithmen genannt, und Multi-Kernel Ansätze.

Diese Ausgestaltung weist den Vorteil auf, dass für das Lernen der Interferenzkarte Messdaten genutzt werden können, wie sie auf entsprechenden Protokollen basierend, in dem zellularen Mobilfunkkommunikationssystem vorgesehen sind. Somit werden keine zusätzlichen Messungen benötigt, wodurch Ressourcen eingespart werden können.

Entsprechend einer weiteren exemplarischen Ausgestaltung weist das Verfahren ferner auf, dass das Bereitstellen der Funksignalinterferenzkarte basierend auf Messinformationen von mit der Basisstation verbundenen Mobilfunkkommunikationsendgeräten erfolgt, wie sie mindestens in einem Long Term Evolution Standard, insbesondere in einem 4G Standard und/oder 3.9G Standard vorgesehen sind.

Ein Long Term Evolution Standard im Sinne der Erfindung kann dabei ein Long Term Evolution Standard eines zellularen Mobilfunkkommunikationsnetzes sein, kurz LTE oder auch 3,9G genannt. Dies ist eine Bezeichnung für einen 3,9G-Standard im Rahmen des 3GPP, der die 4G-Definitionen des "Telecommunication Standardization Sector", auch ITU-T genannt, nicht vollkommen erfüllt. Aus Marketing-Gründen wird dieser Standard dennoch als 4G beworben. Der geplante Nachfolger von LTE ist der in Standardisierung befindliche IMT-Advanced 4G-Mobilfunkstandard namens LTE-Advanced und ist abwärtskompatibel zu LTE.

Dabei basieren die Messinformationen auf Messinformationen und/oder Protokollen, wie sie mindestens in einem Long Term Evolution Standard beziehungsweise 3.9G Standard vorgesehen sind. Dabei kann auch ein Mobilfunkstandard für ein zellulares Mobilfunkkommunikationsnetz vorgesehen sein, der höher als 3.9G oder 4G definiert ist.

Somit kann die Basisstation Messungen erhalten, die beispielsweise auf Messungen, wie sie im LTE-Standard oder höher definierten Standards definiert sind, beschränkt sein können. Diese Informationen können dann dazu genutzt werden, um beispielsweise eine Interferenzkarte aus den geographischen Ortsmessungen zu mitteln. Damit kann die entsprechende Basisstation beispielsweise eine Schätzung einer durchschnittlichen Kanalbedingung vornehmen, für eine entsprechende Endgeräte-zu-Endgeräte Kommunikation.

Diese Messwerte beziehungsweise daraus erstellte Berichte können beispielsweise "Signal to Interference plus Noise Ratio" Berichte, auch SINR-Berichte genannt, RSSI-Berichte oder andere im Long Term Evolution Standard oder darüber definierte Berichte sein.

Diese Ausgestaltung weist den Vorteil auf, dass für das Lernen der Interferenzkarte Messdaten genutzt werden können, wie sie auf entsprechenden LTE-Protokollen und darauf aufbauenden Standards basierend, in dem zellularen Mobilfunkkommunikationssystem vorgesehen sind. Somit werden keine zusätzlichen Messungen benötigt, wodurch Ressourcen eingespart werden können.

Entsprechend einer weiteren exemplarischen Ausgestaltung weist das Verfahren ferner auf, dass der Lernalgorithmus für eine geographische Funksignalinterferenzkarte basierend auf einem Adaptive Projected Subgradient Method basierenden Algorithmus erfolgt.

Ein solcher Algorithmus kann beispielsweise auf "Interference Identification in Cellular Networks via Adaptive Projected Subgradient Methods" basieren, als auch auf "MMSE Interference Estimation in LTE Networks". Diese beiden beispielhaften Verfahren können dabei zu einem diesbezüglichen Lernalgorithmus verwendet werden. Das erste Verfahren beschreibt dabei einen adaptiven Subgradienten Entwurfsansatz, für Lernverfahren in verstreuten Netzen, auch als "Adaptive Projected Subgradient Approach to Learning in Diffusion Networks" bekannt. Das zweite beispielhafte Verfahren kann für den Lernalgorithmus genutzt werden, indem durch Nutzung dieses Verfahrens ein optimaler linearer "Minimum Mean Square Error" Schätzer, auch "MMSE estimator" genannt, genutzt wird, um die geographische Funksignalinterenzkarte zu generieren.

Diese Ausgestaltung weist den Vorteil auf, dass auf zellulare Mobilfunknetzwerke zugeschnittene, effiziente Lernalgorithmen genutzt werden können, um die Interferenzkarte generieren zu können.

Entsprechend einer weiteren exemplarischen Ausgestaltung weist das Verfahren ferner auf, dass die Konfigurationsinformation bezüglich der Konfigurationseinstellung dazu geeignet ist, bezüglich einer Endgeräte-zu-Endgeräte Kommunikation, für ein Endgeräte-zu-Endgeräte Mobilfunkkommunikationsendgerät und/oder eines Nutzers des Mobilfunkkommunikationsendgerätes einen Übertragungskanal zu konfigurieren, eine Servicequalität zu erhöhen, eine Funksignalinterferenz so kompensieren, eine proaktive Ressourcenallokation vorzunehmen und/oder eine Linkadaption vorzunehmen.

Diese Ausgestaltung weist den Vorteil auf, dass eine bessere Kommunikationsqualität erzielbar sein kann.

Entsprechend einer weiteren exemplarischen Ausgestaltung weist das Verfahren ferner auf, dass eine Bestimmung der Konfigurationseinstellung aufweist: Ermitteln einer Gesamtempfangsleistung an einem empfangenden Mobilfunkkommunikationsendgerät. Bestimmen einer Sendeleistung für ein sendendes Mobilfunkkommunikationsendgerät. Und ermitteln einer Kanaldämpfung, basierend auf einer Division einer Subtraktion der ortsabhängigen Funksignalinterferenzstörung von der Gesamtempfangsleistung an dem empfangenden Mobilfunkkommunikationsendgerät, mit der Sendeleistung für das sendende Mobilfunkkommunikationsendgerät. Dabei entspricht das sendende Mobilfunkkommunikationsendgerät dem ersten Mobilfunkkommunikationsendgerät und das empfangende Mobilfunkkommunikationsendgerät dem zweiten Mobilfunkkommunikationsendgerät.

Diese Ausgestaltung weist den Vorteil auf, dass eine noch bessere Kommunikationsqualität erzielbar sein kann.

Entsprechend einer weiteren exemplarischen Ausgestaltung weist das Verfahren ferner auf, dass das Aufbauen einer Endgeräte-zu-Endgeräte Kommunikation zwischen dem ersten Mobilfunkkommunikationsendgerät und dem zweiten Mobilfunkkommunikationsendgerät, unter Berücksichtigung der bereitgestellten Konfigurationsinformation bezüglich der Konfigurationseinstellung, eine Anpassungsfähigkeit einer Modulation, einer Kanalkodierung, einer Signalübertragungsleistung und/oder eines Antennenübertragungsmodus an den an der Endgeräte-zu-Endgeräte Kommunikation beteiligten Mobilfunkkommunikationsendgeräten aufweist.

Diese Ausgestaltung weist den Vorteil auf, dass eine noch bessere Kommunikationsqualität erzielbar sein kann.

Entsprechend einer weiteren exemplarischen Ausgestaltung weist das Verfahren ferner auf, dass die Endgeräte-zu-Endgeräte Kommunikation dazu eingerichtet ist, zwischen dem ersten Mobilfunkkommunikationsendgerät und dem zweiten Mobilfunkkommunikationsendgerät exklusiv zu erfolgen.

Ein exklusives Erfolgen einer Endgeräte-zu-Endgeräte Kommunikation im Sinne der Erfindung, kann dabei meinen, dass die Endgeräte-zu-Endgeräte Kommunikation zwischen zwei Teilnehmern zudem exklusiv erfolgt, also ohne Teilnahme einer Basisstation stattfindet. Der Basisstation kommt dabei beispielsweise lediglich die Aufgabe zu, eine Aussage über eine Kanalqualitätsbedingung bei der Endgeräte-zu-Endgeräte Kommunikation zu machen, jedoch nicht, wie bei der herkömmlichen Kommunikation in einem zellularen Mobilfunktelekommunikationsnetz das Routing zwischen den Teilnehmern zu übernehmen und somit quasi als man-in-the-middle zu fungieren, also die Gesprächs- und Datenpakete zu den Teilnehmern selbst weiterzuleiten.

Auch kann die Endgeräte-zu-Endgeräte Kommunikation exklusiv zwischen zwei Teilnehmern oder auch exklusiv zwischen mehreren Teilnehmern erfolgen. Somit also jeweils ohne eine unmittelbare Beteiligung einer Basisstation an der jeweiligen Kommunikation selbst.

Diese Ausgestaltung hat den Vorteil, dass die eigentliche Kommunikation zwischen den Endgeräten ohne Basisstation auskommt.

Die Erfindung erlaubt es somit, eine Endgeräte-zu-Endgeräte Kommunikation in einem zellularen Mobilfunkkommunikationsnetz für mindestens zwei Mobilfunkkommunikationsendgeräte bereitzustellen, bei der für die eigentliche Kommunikation der Teilnehmer miteinander, keine Basisstation vonnöten ist. Die Basisstation dient dabei lediglich dazu, eine Funksignalinterferenzkarte bereitzustellen, um eine Aussage über die Kanalqualität des Funksignales für die Endgeräte-zu-Endgeräte Kommunikation zu ermöglichen. Dadurch können Ressourcen eingespart werden und die D2D Kommunikation für C-ITS Anwendungen wird ermöglicht. Durch die erfindungsgemäße Lehre entfallen aufwendige und eventuell nur schwer oder gar nicht durchführbare Kanalmessungen und entsprechende Messprotokolle für alle D2D-Paare und zellulare Mobilfunkkommunikationsendgeräte in der Zelle.

Die Erfindung wird nachfolgend eingehender an Hand der Figuren erläutert werden. In diesen zeigen:

Fig. 1 eine schematische Darstellung eines vorgeschlagenen Verfahrens gemäß einer beispielhaften Ausgestaltung der Erfindung;
Fig. 2 eine schematische Darstellung eines vorgeschlagenen Verfahrens gemäß einer weiteren beispielhaften Ausgestaltung der Erfindung;
Fig. 3 eine schematische Darstellung eines vorgeschlagenen Verfahrens gemäß einer weiteren beispielhaften Ausgestaltung der Erfindung; und
Fig. 4 eine schematische Darstellung eines vorgeschlagenen Systems gemäß einer weiteren beispielhaften Ausgestaltung der Erfindung.

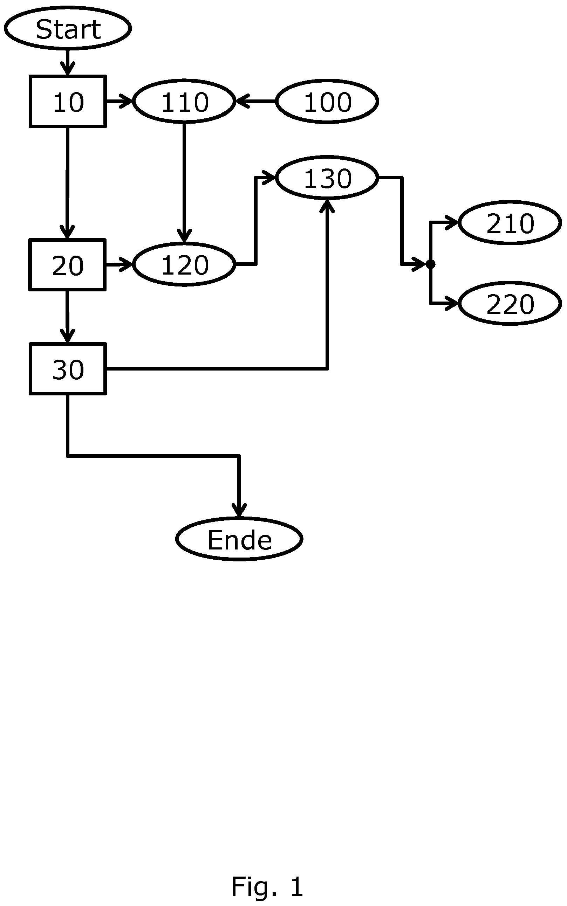

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines Verfahrens zur Endgeräte-zu-Endgeräte Kommunikation in einem zellularen Mobilfunknetz, wobei das Verfahren aufweist: Bereitstellen 10 einer Funksignalinterferenzkarte 110. Dabei ist die Funksignalinterferenzkarte 110 indikativ, für eine ortsabhängige Funksignalinterferenzstörung innerhalb eines Abdeckungsgebietes einer Basisstation 100. Dabei ist die ortsabhängige Funksignalinterferenzstörung indikativ, für eine Funksignalinterferenzstörung einer Endgeräte-zu-Endgeräte Kommunikation 130. Und dabei erfolgt das Bereitstellen der Funksignalinterferenzkarte 110 basierend auf einem Lernalgorithmus für eine geographische Funksignalinterferenzkarte. Bereitstellen 20 einer Konfigurationsinformation 120 bezüglich einer Konfigurationseinstellung einer Funkübertragung für eine Endgeräte-zu-Endgeräte Kommunikation 130 zwischen einem ersten Mobilfunkkommunikationsendgerät 210 und einem zweiten Mobilfunkkommunikationsendgerät 220. Dabei erfolgt das Bereitstellen der Konfigurationsinformation 120 basierend auf der ortsabhängigen Funksignalinterferenzstörung der Funksignalinterferenzkarte 110. Und dabei ermöglicht die Konfigurationseinstellung eine Aussage bezüglich einer vorzunehmenden Konfiguration der Funkübertragung. Und aufbauen 30 einer Endgeräte-zu-Endgeräte 130 Kommunikation zwischen dem ersten Mobilfunkkommunikationsendgerät 210 und dem zweiten Mobilfunkkommunikationsendgerät 220, unter Berücksichtigung der bereitgestellten Konfigurationsinformation 120 bezüglich der Konfigurationseinstellung.

Mathematisch kann das wie folgt betrachtet werden:

Die Schätzung der geographischen Funksignalinterferenzkarte basieren auf Messungen $x_n$, $y_n$ zum Zeitpunkt n, wobei $x_n \in \mathbb{R}^2$ die geographische Ortskoordinate des berichtenden Teilnehmers beziehungsweise Nutzers ist. $y_n \in \mathbb{R}$ stellt dann dabei die gesamte gemessene Interferenz an der Koordinate $x_n$ dar. Die Beziehung zwischen $y_n$ und $x_n$ lautet dann $y_n := f(x_n) + \varepsilon$, wobei

$$f \colon \mathbb{R}^2 \to \mathbb{R}$$

eine unbekannte Funktion darstellt und $\varepsilon$ den Messfehler angibt.

Von einem praxisorientierteren Standpunkt aus betrachtet, ist es hauptsächlich von Interesse, die Interferenz eines Satzes diskreter geographischer Orte zu lernen. Diese können als Pixel der Interferenzkarte abstrahiert werden. Daher können wir $V \in \mathbb{R}^{X_1 \times X_2}$ als Interferenzmatrix definieren, welche die geographischen Koordinaten auf einen Gesamtinterferenzwert abbildet. Daher kann ein jedes Element der Matrix als eine aggregierte Interferenz an dem entsprechenden geographischen Ort angesehen werden. Basierend auf der aktuellen Schätzung von $f$, kann eine Approximation für $\tilde{V}$ gefunden werden. Zum Zeitpunkt t, berichten Kommunikationsteilnehmer beziehungsweise Kommunikationsnutzer in der Zelle ihre Messungen, wie beispielsweise RSSI-Messungen. Dabei können nicht nur die D2D Kommunikationsnutzer, sondern auch andere Mobilfunkteilnehmer berichten. Diese Messungen $v(x, t) \in \mathbb{R}$ bezüglich ihrer aktuellen Positionen $x \in \mathbb{R}^2$ werden an die entsprechende Basisstation der Zelle übermittelt beziehungsweise berichtet. Sobald diese Daten die Basisstation erreichen, können sie mittels eines nunmehr geschätzten $\tilde{V}$ für eine Aktualisierung der echten Interferenzmatrix $V$ genutzt werden.

Unter der Annahme, dass ein D2D Teilnehmer beziehungsweise D2D Kommunikationsempfänger r in der Lage ist, die gesamte empfangene Leistung zu messen und einen entsprechenden Bericht zu erzeugen, kann solch ein Bericht eines D2D Kommunikationsempfängers zum Zeitpunkt t aufgefasst werden als:

$$\gamma(t, x_s, x_r) = p_s h_{sr}(t) + V(t, x_r)$$

Dabei sind $x_s$ der geographische Ort des D2D Kommunikationssenders, $x_r$ der geographische Ort des D2D Kommunikationsempfängers, $p_s$ die Übertragungsleistung des D2D Kommunikationssenders und $h_{sr}(t)$ der Kanal zwischen den beiden D2D Kommunikationsteilnehmern.

Ein Lösungsansatz kann dabei sein, das Wissen um $\tilde{V}(t, x_r)$ und $p_s$ an der Basisstation dazu zu nutzen, einen Schätzwert des Kanales $h_{sr}(t)$ als $\overline{h}_{sr}(t)$ zu erhalten, mit:

$$\bar{h}_{sr}(t) = \frac{\gamma(t, \boldsymbol{x}_s, \boldsymbol{x}_r) - \tilde{V}(t, \boldsymbol{x}_r)}{p_s}$$

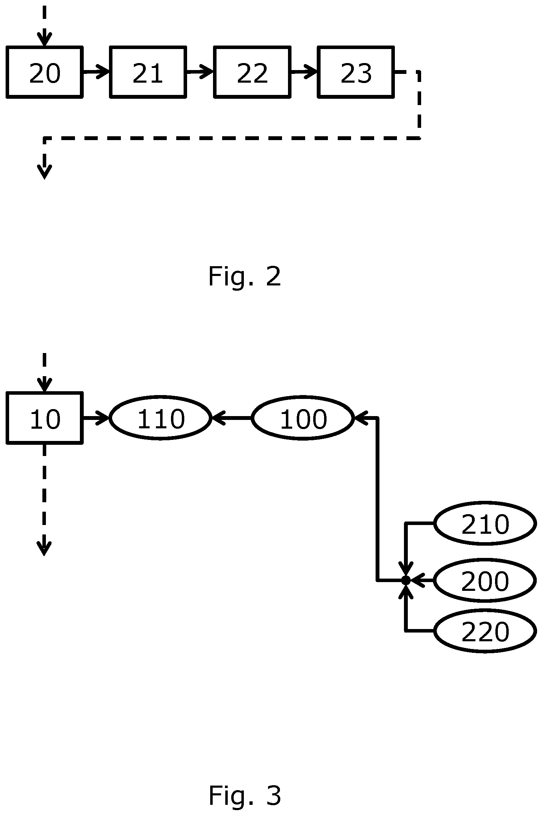

Fig. 2 zeigt eine schematische Darstellung eines vorgeschlagenen Verfahrens gemäß einer weiteren beispielhaften Ausgestaltung der Erfindung.

Dabei zeigt Fig. 2 eine schematische Darstellung eines bezüglich der Fig. 1 weiterentwickelten Verfahrens. Das zuvor für Fig. 1 gesagte, gilt daher auch für Fig. 2.

Fig. 2 zeigt das Verfahren aus Fig. 1 bei dem ferner eine Bestimmung der Kanalqualitätsbedingung bezüglich der Aussage über die Kanaldämpfung aufweist: Ermitteln 21 einer Gesamtempfangsleistung an einem empfangenden Mobilfunkkommunikationsendgerät. Bestimmen 22 einer Sendeleistung für ein sendendes Mobilfunkkommunikationsendgerät. Und ermitteln 23 der Kanaldämpfung, basierend auf einer Division einer Subtraktion der ortsabhängigen Funksignalinterferenzstörung von der Gesamtempfangsleistung an dem empfangenden Mobilfunkkommunikationsendgerät, mit der Sendeleistung für das sendende Mobilfunkkommunikationsendgerät. Und dabei entspricht das sendende Mobilfunkkommunikationsendgerät dem ersten Mobilfunkkommunikationsendgerät 210 und das empfangende Mobilfunkkommunikationsendgerät dem zweiten Mobilfunkkommunikationsendgerät 220.

Fig. 3 zeigt eine schematische Darstellung eines vorgeschlagenen Verfahrens gemäß einer weiteren beispielhaften Ausgestaltung der Erfindung.

Dabei zeigt Fig. 3 eine schematische Darstellung eines bezüglich der Fig. 1 weiterentwickelten Verfahrens. Das zuvor für Fig. 1 gesagte, gilt daher auch für Fig. 3.

Fig. 3 zeigt das Verfahren aus Fig. 1 bei dem ferner das Bereitstellen 10 der Funksignalinterferenzkarte 110 basierend auf Messinformationen von mit der Basisstation 100 verbundenen Mobilfunkkommunikationsvorrichtungen 200, 210, 220 erfolgt. Und dabei basieren die Messinformationen auf Messinformationen und/oder Protokollen, wie sie mindestens in einem Long Term Evolution Standard beziehungsweise 3.9G Standard vorgesehen sind. Dabei kann auch ein Mobilfunkstandard für ein zellulares Mobilfunkkommunikationsnetz vorgesehen sein, der höher als 3.9G oder 4G definiert ist.

Um besser zwischen einer allgemein mit einer Basisstation verbundenen Mobilfunkkommunikationsvorrichtung 200 und einer Mobilfunkkommunikationsvorrichtung 210, 200, welche zur Endgeräte-zu-Endgeräte Kommunikation 130 in dem zellularen Mobilfunknetz genutzt wird, zu unterscheiden, wird die Letztere Mobilfunkkommunikationsendgerät 210, 200 genannt.

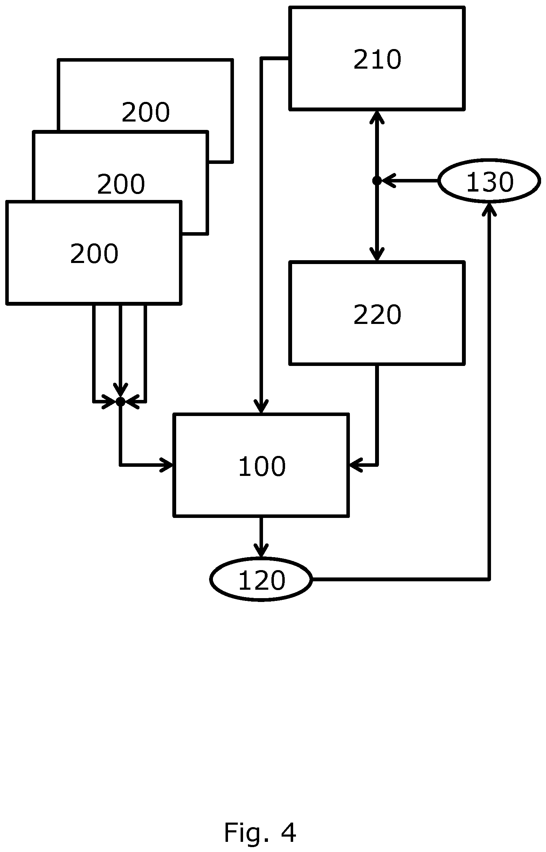

Fig. 4 zeigt eine schematische Darstellung eines vorgeschlagenen Systems zur Endgeräte-zu-Endgeräte Kommunikation 130 in einem zellularen Mobilfunknetz, gemäß einer weiteren beispielhaften Ausgestaltung der Erfindung.

Wie Fig. 4 entnommen werden kann, weist das System auf: Eine Basisstation 100 eines Mobilfunksystems, ein erstes Mobilfunkkommunikationsendgerät 210 und ein zweites Mobilfunkkommunikationsendgerät 220. Dabei ist die Basisstation 100 dazu eingerichtet, mit der Basisstation 100 verbundenen Endgeräte-zu-Endgeräte Mobilfunkkommunikationsvorrichtungen 200, 210, 220 eine entsprechende Information, bezüglich einer Konfigurationsinformation 120, bezüglich einer Konfigurationseinstellung einer Funkübertragung für eine Endgeräte-zu-Endgeräte Kommunikation 130 bereitzustellen. Und dabei ist das System dazu eingerichtet, ein erfindungsgemäßes Verfahren auszuführen.

In Fig. 4 sind beispielhaft über die beiden Mobilfunkkommunikationsendgeräte 210, 220 hinaus noch drei weitere Mobilfunkkommunikationsvorrichtungen 200 dargestellt. Diese nehmen an der Endgeräte-zu-Endgeräte Kommunikation 130 selbst nicht teil, senden jedoch ihre Messergebnisse an die Basisstation 100, damit diese die Funksignalinterferenzkarte 110 aktuell halten kann, und aus dieser Karte, die für die Endgeräte-zu-Endgeräte Kommunikation 130 benötigten Informationen den beiden in Fig. 4 dargestellten Kommunikationsteilnehmern 210, 220 zur Verfügung stellen kann.

Ein Anwendungsszenario für solch eine C-ITS Anwendung mittels D2D Kommunikation könnte beispielsweise eine Lastkraftwagen-Fahrt, auch LKW-Fahrt genannt, mit hinter dem LKW fahrenden Personenkraftwagen, auch PKW genannt, auf einer Landstraße sein. Dabei kann der LKW mit einer vorausschauenden Videokamera ausgerüstet sein, beispielsweise für ein Spur- und Abstandshalte-Assistenzsystem. Der Videofeed dieser Kamera kann in diesem Szenario nunmehr beispielsweise dem oder den hinter dem LKW fahrenden PKW via D2D Kommunikation übermittelt werden, so dass der oder die Fahrer des oder der hinter dem LKW befindlichen PKW auf ihrem jeweils internen Display mittels des empfangenen Videofeed der LKW-Kamera sehen können, wie sich die Verkehrslage vor dem LKW darstellt. Dadurch kann ein Fahrer eines PKW besser entscheiden, ob er ein Überholmanöver des LKW einleiten oder besser abwarten soll. Auf diese Weise können Unfalle vermieden werden, da für die Überholentscheidung wichtige Informationen verfügbar werden, welche bislang nicht verfügbar sind.

Die Erfindungsidee kann wie folgt zusammengefasst werden. Es werden ein Verfahren, ein diesbezügliches System bereitgestellt, wodurch es möglich werden kann, eine D2D Kommunikation, auch Endgeräte-zu-Endgeräte Kommunikation genannt, für ein zellulares Mobilfunkkommunikationsnetz bereitzustellen. Dabei stellt die in der Zelle verantwortliche Basisstation eine Interferenzkarte ihrer Zelle bereit. Die Messdaten für die Erzeugung dieser Interferenzkarte werden dabei von Mobilfunkkommunikationsteilnehmern in der entsprechenden Zelle erbracht. Mittels der erzeugten Interferenzkarte kann eine Kanalinterferenzschätzung für den genutzten Kanal einer D2D Kommunikation für die, diesen Kanal nutzenden D2D Kommunikationsteilnehmer zur Verfügung gestellt werden, so dass die D2D Kommunikationsteilnehmer ihre Kommunikation entsprechend anpassen können. Die D2D Kommunikation kann dabei exklusiv zwischen den Teilnehmern erfolgen, ohne dass die entsprechende Basisstation daran beteiligt ist.

Bezugszeichenliste

| 10 | Bereitstellen einer Funksignalinterferenzkarte |
| 20 | bereitstellen einer Konfigurationsinformation bezüglich einer Konfigurationseinstellung einer Funkübertragung für eine Endgeräte-zu-Endgeräte Kommunikation |
| 21 | Ermitteln einer Gesamtempfangsleistung an einem empfangenden Mobilfunkkommunikationsendgerät |
| 22 | bestimmen einer Sendeleistung für ein sendendes Mobilfunkkommunikationsendgerät |
| 23 | ermitteln einer Kanaldämpfung |
| 30 | aufbauen einer Endgeräte-zu-Endgeräte Kommunikation |
| 100 | Basisstation |
| 110 | Funksignalinterferenzkarte |
| 120 | Konfigurationsinformation bezüglich einer Konfigurationseinstellung |
| 130 | Endgeräte-zu-Endgeräte Kommunikation |
| 200 | Mobilfunkkommunikationsvorrichtung |
| 210 | erstes Mobilfunkkommunikationsendgerät |
| 220 | zweites Mobilfunkkommunikationsendgerät |

**Patentansprüche**

1. Ein Verfahren zur Endgeräte-zu-Endgeräte Kommunikation in einem zellularen Mobilfunknetz, insbesondere für eine Kooperative Intelligente Transportsysteme Kommunikation, das Verfahren aufweisend:

- Bereitstellen (10) einer Funksignalinterferenzkarte (110), wobei die Funksignalinterferenzkarte (110) indikativ ist, für eine ortsabhängige Funksignalinterferenzstörung innerhalb eines Abdeckungsgebietes einer Basisstation (100), wobei die ortsabhängige Funksignalinterferenzstörung indikativ ist, für eine Funksignalinterferenzstörung einer Endgeräte-zu-Endgeräte Kommunikation (130), und wobei das Bereitstellen der Funksignalinterferenzkarte (110) basierend auf einem Lernalgorithmus für eine geographische Funksignalinterferenzkarte erfolgt,
- Bereitstellen (20) einer Konfigurationsinformation (120) bezüglich einer Konfigurationseinstellung einer Funkübertragung für eine Endgeräte-zu-Endgeräte Kommunikation (130) zwischen einem ersten Mobilfunkkommunikationsendgerät (210) und einem zweiten Mobilfunkkommunikationsendgerät (220), wobei das Bereitstellen der Konfigurationsinformation (120) basierend auf der ortsabhängigen Funksignalinterferenzstörung der Funksignalinterferenzkarte (110) erfolgt, und wobei die Konfigurationseinstellung eine Aussage bezüglich einer vorzunehmenden Konfiguration der Funkübertragung ermöglicht, und

- Aufbauen (30) einer Endgeräte-zu-Endgeräte (130) Kommunikation zwischen dem ersten Mobilfunkkommunikationsendgerät (210) und dem zweiten Mobilfunkkommunikationsendgerät (220), unter Berücksichtigung der bereitgestellten Konfigurationsinformation (120) bezüglich der Konfigurationseinstellung.

2. Das Verfahren gemäß Anspruch 1, wobei das Bereitstellen (10) der Funksignalinterferenzkarte (110) basierend auf einer Received Signal Strength Indication Information erfolgt.

3. Das Verfahren gemäß Anspruch 1 oder 2, wobei das Bereitstellen (10) der Funksignalinterferenzkarte (110) basierend auf Messinformationen von mit der Basisstation (100) verbundenen Mobilfunkkommunikationsvorrichtungen (200, 210, 220) erfolgt, wie sie mindestens in einem Long Term Evolution Standard vorgesehen sind.

4. Das Verfahren gemäß einem der vorhergehenden Ansprüche, wobei der Lernalgorithmus für eine geographische Funksignalinterferenzkarte basierend auf einem Adaptive Projected Subgradient Method basierenden Algorithmus erfolgt.

5. Das Verfahren gemäß einem der vorhergehenden Ansprüche, wobei die Konfigurationsinformation (120) bezüglich der Konfigurationseinstellung dazu geeignet ist, bezüglich einer Endgeräte-zu-Endgeräte Kommunikation (130), für ein Endgeräte-zu-Endgeräte Mobilfunkkommunikationsendgerät (210, 220) und/oder eines Nutzers des Mobilfunkkommunikationsendgerätes (210, 220) einen Übertragungskanal zu konfigurieren, eine Servicequalität zu erhöhen, eine Funksignalinterferenz so kompensieren, eine proaktive Ressourcenallokation vorzunehmen und/oder eine Linkadaption vorzunehmen.

6. Das Verfahren gemäß einem der vorhergehenden Ansprüche, wobei eine Bestimmung der Konfigurationseinstellung aufweist:

- Ermitteln (21) einer Gesamtempfangsleistung an einem empfangenden Mobilfunkkommunikationsendgerät,

- Bestimmen (22) einer Sendeleistung für ein sendendes Mobilfunkkommunikationsendgerät, und

- Ermitteln (23) einer Kanaldämpfung, basierend auf einer Division einer Subtraktion der ortsabhängigen Funksignalinterferenzstörung von der Gesamtempfangsleistung an dem empfangenden Mobilfunkkommunikationsendgerät, mit der Sendeleistung für das sendende Mobilfunkkommunikationsendgerät, wobei das sendende Mobilfunkkommunikationsendgerät dem ersten Mobilfunkkommunikationsendgerät (210) und das empfangende Mobilfunkkommunikationsendgerät dem zweiten Mobilfunkkommunikationsendgerät (220) entspricht.

7. Das Verfahren gemäß einem der vorhergehenden Ansprüche, wobei das Aufbauen (30) einer Endgeräte-zu-Endgeräte Kommunikation (130) zwischen dem ersten Mobilfunkkommunikationsendgerät (210) und dem zweiten Mobilfunkkommunikationsendgerät (220), unter Berücksichtigung der bereitgestellten (20) Konfigurationsinformation (120) bezüglich der Konfigurationseinstellung, eine Anpassungsfähigkeit einer Modulation, einer Kanalkodierung, einer Signalübertragungsleistung und/oder eines Antennenübertragungsmodus an den an der Endgeräte-zu-Endgeräte Kommunikation (130) beteiligten Mobilfunkkommunikationsendgeräten (210, 220) aufweist.

8. Das Verfahren gemäß einem der vorhergehenden Ansprüche, wobei die Endgeräte-zu-Endgeräte Kommunikation dazu eingerichtet ist, zwischen dem ersten Mobilfunkkommunikationsendgerät und dem zweiten Mobilfunkkommunikationsendgerät exklusiv zu erfolgen.

9. Ein System zur Endgeräte-zu-Endgeräte Kommunikation (130) in einem zellularen Mobilfunknetz, das System aufweisend:

- Eine Basisstation (100) eines Mobilfunksystems,

- ein erstes Mobilfunkkommunikationsendgerät (210), und

- ein zweites Mobilfunkkommunikationsendgerät (220), wobei

die Basisstation (100) dazu eingerichtet ist, mit der Basisstation (100) verbundenen Endgeräte-zu-Endgeräte Mobilfunkkommunikationsvorrichtungen (200, 210, 220) eine entsprechende Information, bezüglich einer Konfigurationsinformation (120), bezüglich einer Konfigurationseinstellung eines Funkkanales für eine Endgeräte-zu-Endgeräte Kommunikation (130) bereitzustellen, und wobei das System dazu eingerichtet ist, ein Verfahren gemäß einem der vorhergehenden Ansprüche auszuführen.

10. Ein Computerprogrammprodukt für ein System gemäß Anspruch 9, wobei das System nach einem Verfahren gemäß einem der Ansprüche 1 bis 8 betreibbar ist.

11. Ein Datenträger aufweisend ein Computerprogrammprodukt gemäß Anspruch 10.

## Claims

1. A method for terminal-to-terminal communication in a cellular mobile radio network, more especially for a cooperative intelligent transport systems communication, the method comprising the steps of:

- providing (10) a radio signal interference map (110), wherein the radio signal interference map (110) is indicative of a location-dependent radio signal interference disturbance within a coverage area of a base station (100), wherein the location-dependent radio signal interference disturbance is indicative of a radio signal interference disturbance of a terminal-to-terminal communication (130), and wherein the radio signal interference map (110) is provided on the basis of a learning algorithm for a geographic radio signal interference map;
- providing (20) configuration information (120) regarding a configuration setting of a radio transmission for a terminal-to-terminal communication (130) between a first mobile radio communication terminal (210) and a second mobile radio communication terminal (220), wherein the configuration information (120) is provided on the basis of the location-dependent radio signal interference disturbance of the radio signal interference map (110), and wherein the configuration setting enables a statement regarding a configuration to be performed in respect of the radio transmission; and
- setting up (30) a terminal-to-terminal communication (130) between the first mobile radio communication terminal (210) and the second mobile radio communication terminal (220), taking into account the provided configuration information (120) regarding the configuration setting.

2. A method according to claim 1, wherein the radio signal interference map (110) is provided (10) on the basis of received signal strength indication information.

**3.** A method according to claim 1 or 2, wherein the radio signal interference map (110) is provided (10) on the basis of measurement information from mobile radio communication devices (200, 210, 220) connected to the base station (100), as are provided at least in a Long Term Evolution standard.

**4.** A method according to any one of the preceding claims, wherein the leaning algorithm for a geographic radio signal interference map is implemented on the basis of an algorithm based on an adaptive projected subgradient method.

**5.** A method according to any one of the preceding claims, wherein the configuration information (120) regarding the configuration setting is suitable, regarding a terminal-to-terminal communication (130), to configure a transmission channel, increase a service quality, compensate for a radio signal interference, perform a proactive resource allocation, and/or perform a link adaptation, for a terminal-to-terminal mobile radio communication terminal (210, 220) and/or a user of the mobile radio communication terminal (210, 220).

**6.** A method according to any one of the preceding claims, wherein determining the configuration setting comprises:

- ascertaining (21) a total received power at a receiving mobile radio communication terminal,
- determining (22) a transmission power for a transmitting mobile radio communication terminal, and
- ascertaining (23) a channel damping, on the basis of a division of a subtraction of the location-dependent radio signal interference disturbance from the total received power at the receiving mobile radio communication terminal by the transmission power for the transmitting mobile radio communication terminal, wherein the transmitting mobile radio communication terminal corresponds to the first mobile radio communication terminal (210) and the receiving mobile radio communication terminal corresponds to the second mobile radio communication terminal (220).

**7.** A method according to any one of the preceding claims, wherein the setting up (30) of a terminal-to-terminal communication (130) between the first mobile radio communication terminal (210) and the second mobile radio communication terminal (220), under consideration of the provided (20) configuration information (120) regarding the configuration setting, comprises an adaptability of a modulation, a channel encoding, a signal transmission power and/or an antenna transmission mode to the mobile radio communication terminals (210, 220) participating in the terminal-to-terminal communication (130).

**8.** A method according to any one of the preceding claims, wherein the terminal-to-terminal communication is configured to be carried out exclusively between the first mobile radio communication terminal and the second mobile radio communication terminal.

**9.** A system for terminal-to-terminal communication (130) in a cellular mobile radio network, the system comprising:

- a base station (100) of a mobile radio system,
- a first mobile radio communication terminal (210), and
- a second mobile radio communication terminal (220), wherein the base station (100) is configured to provide terminal-to-terminal mobile radio communication devices (200, 210, 220) connected to the base station (100) with appropriate information, regarding configuration information (120), regarding a configuration setting of a radio channel for a terminal-to-terminal communication (130), and wherein

the system is configured to carry out a method according to any one of the preceding claims.

**10.** A computer program product for a system according to claim 9, wherein the system can be operated by a method according to any one of claims 1 to 8.

**11.** A data carrier comprising a computer program product according to claim 10.

**Revendications**

**1.** Procédé de communication de terminal à terminal dans un réseau de téléphonie mobile cellulaire, en particulier pour permettre une communication coopérative de systèmes de transport intelligents, ce procédé comprenant des étapes consistant à :

- se procurer (10) une carte d'interférence de signaux radio (110), cette carte d'interférence de signaux radio (110) indiquant un brouillage des signaux radio dépendant du lieu dans la zone de couverture d'un poste de base (100), le brouillage dépendant du lieu des signaux radio indiquant un brouillage des signaux radio d'une communication de terminal à terminal (130), et la fourniture de la carte d'interférence des signaux radio (110) étant basée sur un algorithme d'apprentissage pour une carte d'interférence des signaux radio géographique,

- se procurer (20) une information de configuration (120) concernant un réglage de configuration d'une transmission radio pour une communication de terminal à terminal (130) entre un premier terminal de communication radio mobile (210) et un second terminal de communication radio mobile (220),
la fourniture de l'information de configuration (120) étant basée sur le brouillage des signaux radio dépendant du lieu de la carte d'interférence des signaux radio (110), et
le réglage de configuration permettant d'obtenir un renseignement concernant la configuration à effectuer de la transmission radio, et
- établir (30) une communication de terminal à terminal (130) entre le premier terminal de communication radio mobile (210) et le second terminal de communication radio mobile (220) en prenant en considération l'information de configuration fournie (120) concernant le réglage de configuration.

2. Procédé conforme à la revendication 1,
selon lequel la fourniture (10) de la carte d'interférence des signaux radio (110) est effectuée sur le fondement d'une information indiquant l'intensité des signaux reçus.

3. Procédé conforme à la revendication 1 ou 2,
selon lequel la fourniture (10) de la carte d'interférence des signaux radio (110) est effectuée sur le fondement d'informations de mesure de dispositifs de communication radio mobile (200, 210, 220) reliés au poste de base (100), tels qu'ils sont prévus au moins dans un standard d'évolution à long terme.

4. Procédé conforme à l'une des revendications précédentes,
selon lequel l'algorithme d'apprentissage pour une carte d'interférence de signaux radio géographiques est effectué sur le fondement d'un algorithme basé sur une méthode adaptative de sous gradients projetés.

5. Procédé conforme à l'une des revendications précédentes,
selon lequel l'information de configuration (120) concernant le réglage de configuration est adaptée, de façon à configurer un canal de transmission, concernant une communication de terminal à terminal (130) pour un terminal de communication radio mobile de terminal à terminal (210, 220) et/ou un utilisateur du terminal de communication radio mobile (210, 220), dans le but d'augmenter la qualité de service, pour compenser une interférence de signaux radio en effectuant une affectation des ressources proactive et/ou une adaptation de lien.

6. Procédé conforme à l'une des revendications précédentes,
selon lequel
la détermination du réglage de configuration comprend des étapes consistant à :

- détecter (21) la puissance de réception globale d'un terminal de communication radio mobile récepteur,
- déterminer (22) la puissance d'émission d'un terminal de communication radio mobile émetteur, et
- détecter (23) l'amortissement de canal sur le fondement de la division de la soustraction du brouillage des signaux radio dépendant du lieu de la puissance de réception globale du terminal de communication radio mobile récepteur avec la puissance d'émission du terminal de communication radio mobile émetteur, le terminal de communication radio mobile émetteur correspondant au premier terminal de communication radio mobile (210) et le terminal de communication radio mobile récepteur correspondant au second terminal de communication radio mobile (220).

7. Procédé conforme à l'une des revendications précédentes selon lequel :

- l'établissement (30) d'une communication de terminal à terminal (130) entre le premier terminal de communication radio mobile (210) et le second terminal de communication radio mobile (220) comporte, en prenant en considération l'information de configuration (120) fournie (20) concernant le réglage de configuration, une capacité d'adaptation d'une modulation, d'un codage de canal, d'une puissance de transmission de signaux et/ou d'un mode de transmission d'antenne aux terminaux de communication radio mobiles (210, 220) participant à la communication de terminal à terminal (130).

8. Procédé conforme à l'une des revendications précédentes selon lequel :
la communication de terminal à terminal est réalisée de façon à être effectuée exclusivement entre le premier terminal de communication radio mobile et le second terminal de communication radio mobile.

9. Système de communication de terminal à terminal (130) dans un réseau de téléphonie mobile cellulaire comprenant :

- un poste de base (100) d'un système de téléphonie mobile,
- un premier terminal de communication radio mobile (210), et

- un second terminal de communication radio mobile (220),

le poste de base (100) étant réalisé pour fournir à des dispositifs de communication radio mobile (200, 210, 220) de terminal à terminal reliés au poste de base (100) une information correspondante concernant une information de configuration (120), concernant un réglage de configuration d'un canal radio pour une communication de terminal à terminal (130), et
le système étant réalisé pour permettre la mise en oeuvre d'un procédé conforme à l'une des revendications précédentes.

10. Produit-programme d'ordinateur destiné à un système conforme à la revendication 9, ce système pouvant fonctionner selon un procédé conforme à l'une des revendications 1 à 8.

11. Support de données comportant un produit programme d'ordinateur conforme à la revendication 10.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015076867 A1
- US 20140141789 A1